**Europäisches Patentamt**

**European Patent Office**

**Office européen des brevets**

(19)

(11) Veröffentlichungsnummer: **0 001 767**

**A1**

# (12) EUROPÄISCHE PATENTANMELDUNG

(21) Anmeldenummer: **78101125.9**

(22) Anmeldetag: **12.10.78**

(51) Int. Cl.²: **C 08 F 12/08**
C 08 K 5/02, C 08 K 5/34
C 08 K 5/46

(30) Priorität: **02.11.77 DE 2748962**

(43) Veröffentlichungstag der Anmeldung:
**16.05.79 Patentblatt 79/10**

(84) Benannte Vertragsstaaten:
**BE CH DE FR GB NL**

(71) Anmelder: **BASF Aktiengesellschaft
Carl-Bosch-Strasse 38
D-6700 Ludwigshafen(DE)**

(72) Erfinder: **Naarmann, Herbert, Dr.
Haardtblick
D-6719 Wattenheim(DE)**

(72) Erfinder: **Hahn, Klaus, Dr.
Burggasse 2
D-6840 Lampertheim(DE)**

(54) **Flammfeste Styrolpolymerisate und deren Verwendung.**

(57) Flammfeste, thermoplastische Formmassen auf Basis von Styrolpolymerisaten, die als Flammschutzmittel eine organische heterocyclische Bromverbindung mit der Gruppierung $N=C-CBr_3$ sowie gegebenenfalls ein Treibmittel enthalten. Die Styrolpolymerisate werden hergestellt durch Polymerisation von Styrol in wäßriger Suspension in Gegenwart der Bromverbindung, wobei als Polymerisationsinitiator eine organische Azoverbindung mit einer Halbwertzeit bei 70°C zwischen 2 und 60 min. verwendet wird. Die Formmassen können zu Formkörpern, Profilen oder Schaumstoffen verarbeitet werden.

EP 0 001 767 A1

BEZEICHNUNG GEÄNDERT
siehe Titelseite

BASF Aktiengesellschaft                    O. Z. 0050/032855

Flammfeste Styrolpolymerisate

Die Erfindung betrifft thermoplastische Formmassen auf Basis von Styrolpolymerisaten, vorzugsweise treibmittelhaltigen Styrolpolymerisaten, die mit einer organischen Bromverbindung flammfest ausgerüstet sind.

Aus der DT-OS 25 45 223 ist bekannt, daß Bromierungsprodukte von Derivaten des Thiadiazols hervorragende Flammschutzmittel für Styrolpolymerisate sind. In der deutschen Patentanmeldung P 27 34 926 wird darauf hingewiesen, daß auch andere heterocyclische Bromverbindungen, welche die Gruppierung $N=C-CBr_3$ im Molekül enthalten, als Flammschutzmittel in ähnlicher Weise geeignet sind.

Treibmittelhaltige Styrolpolymerisate werden nach einem bekannten großtechnischen Verfahren durch Polymerisation von Styrol in wäßriger Suspension in Gegenwart des Treibmittels hergestellt. Im allgemeinen werden dabei organische Peroxide als Polymerisationsinitiatoren verwendet. Sollen Flammschutzmittel in das Styrolpolymerisat inkorporiert werden, so werden die entsprechenden Bromverbindungen im allgemeinen ebenfalls schon bei der Polymerisation zugesetzt.

Es hat sich nun gezeigt, daß in vielen Fällen die oben be-

Dd/Fe

BAD ORIGINAL

0001767

schriebenen hochwirksamen heterocyclischen Bromverbindungen bei der Polymerisation des Styrols mit Peroxidinitiatoren regelnd wirken, wodurch der Polymerisationsverlauf gestört und die Produkteigenschaften des Styrolpolymerisates nachteilig beeinflußt werden können.

Der Erfindung lag also die Aufgabe zugrunde, dieses Problem zu lösen. Es wurde gefunden, daß die regelnde Wirkung der Bromverbindungen weitgehend unterbleibt, wenn als Polymerisationsinitiatoren organische Azoverbindungen verwendet werden.

Gegenstand der Erfindung sind demzufolge flammfeste, thermoplastische Formmassen auf Basis von Styrolpolymerisaten, die als Flammschutzmittel 0,1 bis 5 Gew.% einer organischen heterocyclischen Bromverbindung, welche im heterocyclischen Ring mindestens einmal die Gruppierung $N=C-CBr_3$ enthält, sowie gegebenenfalls ein Treibmittel enthalten, und bei deren Herstellung durch Polymerisation von Styrol in wäßriger Suspension in Gegenwart der Bromverbindung und gegebenenfalls des Treibmittels als Polymerisationsinitiatoren eine organische Azoverbindung verwendet wurde, deren Halbwertzeit bei 70°C in einer Mischung aus 4 Gewichtsteilen Wasser und 2 Gewichtsteilen Styrol zwischen 2 und 60 min. liegt.

Die als Flammschutzmittel erfindungsgemäß verwendeten Bromverbindungen sind in den deutschen Patentanmeldungen DT-OS 25 45 223 und P 27 34 926 ausführlich beschrieben. Diese Schriften sind als Bestandteil der Offenbarung der vorliegenden Patentanmeldung zu betrachten.

Besonders bevorzugt sind die Verbindungen:
2,5-Bis-(tribrommethyl)-1,3,4-thiadiazol,
2,4,6-Tris-(tribrommethyl)-1,3,5-triazin,
2-Tribrommethyl-benzoxazon.

Es sind heterocyclische Verbindungen, welche im heterocyclischen Ring mindestens einmal die Gruppierung $N=C-CBr_3$ enthalten. Vorzugsweise sind sie bei einer Temperatur von 150°C thermisch so stabil, daß bei einstündiger Temperaturbelastung der Gewichtsverlust weniger als 1 % beträgt. Die Zahl der Wasserstoffatome im Molekül ist vorzugsweise gleich oder kleiner als die Zahl der Bromatome; sie soll insbesondere kleiner als 6 sein und ist in speziellen Fällen gleich 0. Die erfindungsgemäßen Formmassen enthalten diese Bromverbindungen in Mengen von 0,1 bis 5, vorzugsweise von 0,5 bis 3 Gew.%. Sie können außer den Bromverbindungen noch andere bekannte Flammschutzmittel oder Flammschutzsynergisten enthalten.

Als Styrolpolymerisate kommen Polystyrol und Mischpolymerisate des Styrols mit bis zu 50 Gew.% an Comonomeren in Frage. Comonomere können z.B. α-Methylstyrol, Acrylnitril sowie Ester der Acryl- oder Metacrylsäure von Alkoholen mit 1 bis 8 Kohlenstoffatomen sein. In Betracht kommen auch schlagzäh modifizierte Styrolpolymerisate, die durch Polymerisation von Styrol, gegebenenfalls zusammen mit Acrylnitril, in Gegenwart kautschukartiger Butadien-, Isopren-, Äthylen/Propylen- oder Acrylester-Polymerisate hergestellt werden, beispielsweise schlagfestes Polystyrol mit 2 bis 10 Gew.% Polybutadien.

Besondere Bedeutung haben Formmassen, die sich zur Herstellung selbstverlöschender Schaumstoffe eignen. Sie enthalten als Treibmittel vorzugsweise flüssige oder gasförmige organische Verbindungen, die das Polymerisat nicht lösen und deren Siedepunkt unterhalb des Erweichungspunktes des Polymerisates liegt, z.B. aliphatische oder cycloaliphatisch Kohlenwasserstoffe, wie Propan, Butan, Pentan, Hexan, Heptan oder Cyclohexan; Ferner Kohlendioxid oder Halogenkohlenwasserstoffe, wie Methylchlorid, Dichlordifluormethan oder 1,2,2-Trifluor-1,1,2-trichloräthan. Auch Treibmittelgemische sind anwendbar. Es ist vorteilhaft, 3 bis 10 Gewichtsprozent, bezogen auf die Formmassen, an Treibmittel zu verwenden.

Die Formmassen können noch weitere Komponenten enthalten, z.B. Füllstoffe, Farbpigmente, Gleitmittel, Weichmacher, Antistatika, Alterungsschutzmittel, Stabilisatoren oder solche Verbindungen, welche die Schaumbildung fördern.

Die erfindungsgemäßen flammfesten Styrolpolymerisate sind dadurch charakterisiert, daß bei ihrer Herstellung durch Polymerisation von Styrol in wäßriger Suspension in Gegenwart der Bromverbindung und gegebenenfalls des Treibmittels als Polymerisationsinitiator eine organische Azoverbindung verwendet wurde. Die Suspensionspolymerisation von Styrol ist an sich bekannt. Sie ist ausführlich beschrieben im Kunststoff-Handbuch, Band V "Polystyrol", Carl Hanser-Verlag, Seiten 679 bis 688. Dabei wird im allgemeinen Styrol, gegebenenfalls zusammen mit den obengenannten Comonomeren, in Wasser suspendiert, wobei übliche organische oder anorganische Suspensionsstabilisatoren, vorzugsweise in Mengen zwischen 0,05 bis 2 Gew.%, bezogen auf die Suspension, zugesetzt werden. Die Polymerisation wird im allgemeinen bei einer Temperatur zwischen 50 und 120°C, vorzugsweise zwischen 60 und 100°C ausgeführt. Man kann das Treibmittel schon während der Polymerisation zusetzen, es ist aber auch möglich, die fertigen Styrolpolymerisate mit einem Treibmittel zu imprägnieren.

Erfindungsgemäß wird als Polymerisationsinitiator eine organische Azoverbindung verwendet, deren Halbwertzeit bei 70°C zwischen 2 und 60 min., vorzugsweise zwischen 5 und 30 min. liegt. Bevorzugt sind solche Azoverbindungen, die durch Nitrilgruppen aktiviert sind, z.B. Azodiisobutyro- nitril, Azoivaleronitril, 2,2-Azo-(diisobuttersäureäthyl-esterimid)-dihydrochlorid, Di-Kaliumsalz der 2,2-Azo-diisobuttersäure, Isobuttersäurenitril-$\alpha$-azocarbonsäureamid.

Weitere Azoverbindungen sind beschrieben in Houben-Weyl, Methoden der organischen Chemie, Band X/2, Seiten 784 - 816. Sie werden im allgemeinen in Mengen von 0,01 bis 3, vorzugsweise von 0,1 bis 1,5 Gew.%, bezogen auf die Monomeren, eingesetzt.

Die Formmasen können beispielsweise durch Spritzgießen, Strangpressen oder - im Falle treibmittelhaltiger Styrolpolymerisate - bevorzugt durch Aufschäumen und Versintern in Formen zu selbstverlöschenden Formkörpern, Profilen oder Schaumstoffen verarbeitet werden. Ein besonderer Vorteil der erfindungsgemäß eingesetzten Bromverbindungen ist ihre hohe Wirksamkeit, auch ohne synergistische Zusätze, wie Peroxide (die jedoch nicht ausgeschlossen sein sollen!). Ferner werden bei vergleichbarem Bromanteil kürzere Verlöschzeiten als mit herkömmlichen Flammschutzmitteln erzielt. Außerdem ist das Abtropfen deutlich verringert.

## Beispiele

In einem Polymerisationskessel wurden jeweils 0,64 Teile Polyvinylpyrrolidon als Suspensionsstabilisator vorgelegt und 0,4 Teile Natriumpyrophosphat in 400 Teilen Wasser gelöst, zugefügt. Der Kesselinhalt wurde gerührt und 200 Teile Styrol, in dem 14 Teile Pentan und jeweils 0,75 Teile Initiator sowie jeweils 3 Teile Flammschutzmittel gelöst waren, zugefügt. Die Reaktionslösung wurde auf 70°C 20 Stunden lang erhitzt und bei dieser Temperatur weitere 15 Stunden gehalten. Das erhaltene Polystyrol enthält das Treibmittel und das Flammschutzmittel inkorporiert. Die Tabelle zeigt die eingesetzten Flammschutzmittel und Azo-

0001767

Verbindungen:

| Versuch | Bromverbindung | Azoverbindung |
|---------|----------------|---------------|
| 1 | Bis-tribrommethyl-thiadiazol | Azodiisobutyronitril |
| 2 | Tris-tribrommethyl-triazin | Azodiisovaleronitril |
| 3 | Tribrommethyl-benzoxazon | Azodiisobuttersaures Kalium |

Das erhaltene treibmittelhaltige Polystyrol wurde abgetrennt, gewaschen und getrocknet. Die Teilchen wurden vorgeschäumt, einen Tag zwischengelagert und dann durch weitere Behandlung mit Dampf in Formen versintert, wobei Schaumpolystyrolblöcke entstanden. 1,5 cm dicke Schaumstreifen wurden von diesen Blöcken durch einen elektrisch beheizten Draht abgeschnitten. Die Streifen wurden mehrere Tage bei Raumtemperatur gelagert und dann auf ein Format von etwa 30 x 40 cm zurechtgeschnitten. Danach wurden diese Streifen an ihrer Kante in eine Leuchtgasflamme gehalten, diese wurde entfernt und die Verlöschzeit gemessen. Der Mittelwert von 10 Messungen betrug jeweils 0 Sekunden, d.h. es trat sofort Verlöschen ein bzw. die Proben waren praktisch nicht brennbar.

Patentansprüche

1. Flammfeste, thermoplastische Formmassen auf Basis von Styrolpolymerisaten, die als Flammschutzmittel 0,1 bis 5 Gew.% einer organischen heterocyclischen Bromverbindung, welche im heterocyclischen Ring mindestens einmal die Gruppierung $N=C-CBr_3$ enthält, sowie gegebenenfalls ein Treibmittel enthalten, dadurch gekennzeichnet, daß bei der Herstellung des Styrolpolymerisates durch Polymerisation von Styrol in wäßriger Suspension in Gegenwart der organischen Bromverbindung und gegebenenfalls des Treibmittels als Polymerisationsinitiator eine organische Azoverbindung verwendet wurde, deren Halbwertzeit bei $70^{\circ}C$ in einer Mischung aus 4 Gewichtsteilen Wasser und 2 Gewichtsteilen Styrol zwischen 2 und 60 min. liegt.

2. Flammfeste, thermoplastische Formmassen nach Anspruch 1, dadurch gekennzeichnet, daß die Bromverbindung 2,5-Bis-(tribrommethyl)-1,3,4-thiadiazol ist.

3. Flammfeste, thermoplastische Formmassen nach Anspruch 1, dadurch gekennzeichnet, daß die Bromverbindung 2,4,6-Tris-(tribrommethyl)-1,3,5-triazin ist.

4. Flammfeste, thermoplastische Formmassen nach Anspruch 1, dadurch gekennzeichnet, daß sie 3 bis 10 Gew.% einer flüssigen oder gasförmigen organischen Verbindung als Treibmittel enthalten.

5. Flammfeste, thermoplastische Formmassen nach Anspruch 1, dadurch gekennzeichnet, daß 0,01 bis 3 Gew.% der Azoverbindung, bezogen auf die Monomeren, eingesetzt wird.

5. Verwendung der Formmassen nach Anspruch 1 zur Herstellung von Formkörpern, Profilen oder Schaumstoffen.

0001767

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| - | DE - A - 2 502 283 (KUREHA KAGAKU KOGYO) <br> * Seite 8, Zeilen 20 bis 22; Seite 9, Zeilen 14, 15 * <br><br> -- | 1-5 | C 08 F 12/08 <br> C 08 K 5/02 <br> C 08 K 5/34 <br> C 08 K 5/46 |
| - | DE - A - 2 439 341 (BAYER) <br> * Versuch 14 * <br><br> -- | 1-5 | |
| - | HOUBEN-WEYL, "Methoden der organischen Chemie", Band XIV/1, 1961, Thieme Verlag, Stuttgart *Seite 425, Absatz 2; Seite 840, Zeilen 13, 14, 17 bis 21 * <br><br> -- | 1-5 | **RECHERCHIERTE SACHGEBIETE (Int. Cl.³)** <br><br> C 08 F 2/38 <br> C 08 F 4/04 <br> C 08 F 12/00 <br> C 08 F 112/00 <br> C 08 K 5/02 <br> C 08 K 5/34 <br> C 08 K 5/46 <br> C 08 L 25/06 |
| - | DE - A - 2 420 298 (BAYER) <br> * Seite 4, Absatz 4 * <br><br> -- | 4,6 | |
| A | DE - A - 2 603 539 (BASF) <br> * Anspruch 1; Seite 8, Zeilen 2,3 * <br><br> ---- | 1-6 | **KATEGORIE DER GENANNTEN DOKUMENTE** <br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

| X | Der vorliegende Recherchenbericht wurde für alle Patentansprüche erstellt. | | |
|---|---|---|---|
| Recherchenort <br> Berlin | Abschlußdatum der Recherche <br> 07-02-1979 | Prüfer <br> KRAIL | |

EPA form 1503.1   06.78